# EUROPEAN PATENT APPLICATION

(11) **EP 4 601 186 A1**
(43) Date of publication of application: **13.08.2025**
(21) Application number: 23893356.8
(22) Date of filing: 08.09.2023
(51) Int. Cl.: H02P 25/032, H02P 25/06, H02P 23/00

(54) **MOTOR DRIVING METHOD AND TERMINAL DEVICE**

(30) Priority: 22.11.2022 CN 202211466439
(71) Applicant: Honor Device Co., Ltd., Shenzhen, Guangdong 518040 (CN)
(72) Inventor: ZHU, Jianwei, Shenzhen, Guangdong 518040 (CN); YUAN, Liangliang, Shenzhen, Guangdong 518040 (CN)
(74) Representative: Epping - Hermann - Fischer
(86) International application number: PCT/CN2023/117809
(87) International publication number: WO 2024/109263

(57) **Abstract**

This application relates to the field of motor driving technologies, and provides a motor driving method and a terminal device. Through the method, an amplitude of a linear motor can be increased from 0 to a maximum value in a short time, so that a user can feel a clear vibration. The method includes: receiving a first vibration event, where the first vibration event is used to trigger a motor to vibrate; and in response to the first vibration event, controlling a vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at a maximum value. The first voltage and the second voltage are in a same direction, and an absolute value of the first voltage is greater than an absolute value of the second voltage.

## Description

This application claims priority to Chinese Patent Application No. 202211466439.4, filed with the China National Intellectual Property Administration on November 22, 2022, and entitled "MOTOR DRIVING METHOD AND TERMINAL DEVICE", which is incorporated herein by reference in its entirety.

### TECHNICAL FIELD

This application relates to the field of motor driving technologies, and in particular, to a motor driving method and a terminal device.

### BACKGROUND

Currently, to improve user experience of a terminal device, a terminal may prompt a user through a vibration when the user performs operations on the terminal. For example, when the user plays a game with the terminal, the terminal may vibrate when the user performs a preset operation, to provide tactile feedback to the user, thereby bringing immersive experience to the user. The vibration of the terminal is implemented through a vibration of a motor mounted in the terminal. Motors may be classified into a non-linear motor and a linear motor. Compared with the non-linear motor which is controlled through turn on/off and has only two modes, namely, a start mode and a stop mode, the linear motor may be driven by a pulse voltage signal, and can provide rich vibration experience to a user through vibrations of different strengths in different ways based on difference periods, amplitudes, and frequencies of pulse voltage signals.

In the prior art, to adapt to the non-linear motor and the linear motor, some third-party applications may invoke a universal vibrator interface provided by an operating system to send a vibration request to a motor drive when having a vibration demand, so that the motor driver outputs a driving voltage of a rated frequency and a rated voltage to continuously drive the motor to vibrate. Under the driving voltage, a vibration intensity of the linear motor gradually increases with time to a maximum intensity and remains at the maximum intensity for continuous vibration. Some extremely short vibrations, which need to be stopped before the vibration intensity of the linear motor reaches a maximum value, may have a low vibration intensity and therefore cannot be sensed by a user.

### SUMMARY

Embodiments of this application provide a motor driving method and a terminal device, which can increase an amplitude of a linear motor in a short time.

To achieve the foregoing objective, the following technical solutions are used in embodiments of this application.

According to a first aspect, a motor driving method is provided. The method is applied to a terminal device. The terminal device includes a vibrator chip and a motor. The motor is a linear motor. The method includes: receiving a first vibration event used to trigger the motor to vibrate, where the first vibration event may include any one of: a terminal device unlocking operation is received from a user, an online payment operation is received from the user, a face registration operation is received from the user, a skill releasing operation is received from the user, an incoming call request is received, and current time matches preset time; and in response to the first vibration event, controlling a vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at a maximum value. The first voltage and the second voltage are in a same direction, and an absolute value of the first voltage is greater than an absolute value of the second voltage. In this way, the amplitude of the motor can quickly reach the maximum value under an action of the first voltage, and remain at the maximum value under an action of the second voltage. In other words, the amplitude of the motor can reach the maximum value even in a very short vibration duration, to bring an obvious vibration feeling to a user, thereby improving user experience.

In an implementation of the first aspect, the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further includes: obtaining a vibration parameter of the motor in response to the first vibration event; and when the vibration parameter does not include a vibration duration, controlling the vibrator chip to output the first voltage to the motor within the first duration, so that the amplitude of the motor reaches the maximum value when the first duration ends, and controlling the vibrator chip to start to output the second voltage to the motor when the first duration ends, so that the amplitude of the motor remains at the maximum value. It may be understood that, the vibration parameter may include or not include the vibration duration based on an actual setting of an application. When the vibration parameter does not include the vibration duration, the terminal device may first control the motor to quickly start, and then control the motor to stop vibrating.

In an implementation of the first aspect, the method further includes: controlling the vibrator chip to output a third voltage to the motor when a preset duration that starts from receiving of the first vibration event by the terminal device ends, so that the amplitude of the motor decreases from the maximum value to 0 within a second duration. The third voltage and the second voltage are in opposite directions, an absolute value of the third voltage is greater than the absolute value of the second voltage, and the preset duration is greater than the first duration. Generally, each vibration event may correspond to a theoretical vibration duration. For example, a theoretical vibration duration corresponding to the first vibration event is the preset duration. In this case, the terminal device needs to control the motor to stop vibrating after the preset duration that starts from the receiving of the first vibration event. Therefore, the vibrator chip is controlled to output the third voltage to the motor when the preset duration that starts from the receiving of the first vibration event by the terminal device, to cause the motor to stop vibrating. For example, if the terminal device receives the first vibration event at 10:00, and the first vibration event requires the motor to stop vibrating after 1 minute, the terminal device may output the third voltage to the motor at 10:01 to control the motor to stop vibrating. Compared with a method of causing a motor to stop vibration by stopping outputting a voltage, this implementation can cause the motor to quickly stop vibrating by outputting the third voltage in an opposite direction from the second voltage and greater than the second voltage, thereby reducing vibration smearing.

In an implementation of the first aspect, the method further includes: controlling the vibrator chip to output a third voltage to the motor when an actual vibration duration of the motor reaches a first value, so that the amplitude of the motor decreases from the maximum value to 0 within a second duration. The third voltage and the second voltage are in opposite directions, and an absolute value of the third voltage is greater than the absolute value of the second voltage. In other words, the terminal device may obtain the actual vibration duration of the motor in real time. When the actual vibration duration reaches the first value, the third voltage is outputted to the motor to case the motor to stop vibrating, so as to reduce a case that the user cannot sense the vibration due to an excessively short actual vibration duration. In addition, the first value may be the theoretical vibration duration corresponding to the first vibration event (that is, the foregoing preset duration). Alternatively, the first value may be another parameter. For details, refer to the following text. The details are not described herein. Compared with the method of causing a motor to stop vibration by stopping outputting a voltage, this implementation can cause the motor to quickly stop vibrating by outputting the third voltage in an opposite direction from the second voltage and greater than the second voltage, thereby reducing vibration smearing.

In an implementation of the first aspect, the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further includes: obtaining a vibration parameter of the motor in response to the first vibration event; and when the vibration parameter includes the vibration duration, controlling the vibrator chip to output the first voltage to the motor within the first duration, so that the amplitude of the motor reaches the maximum value when the first duration ends, controlling the vibrator chip to start to output the second voltage to the motor within the vibration duration when the first duration ends, so that the amplitude of the motor remains at the maximum value, and controlling the vibrator chip to start to output a third voltage to the motor when the vibration duration ends, so that the amplitude of the motor decreases from the maximum value to 0 in a second duration. The third voltage and the second voltage are in opposite directions, and an absolute value of the third voltage is greater than the absolute value of the second voltage. It may be understood that, since the terminal device learns a duration for which the motor needs to be vibrate when the vibration parameter includes the vibration duration, the terminal device may start to output the second voltage to the motor within the vibration duration when the first duration ends, so that the actual vibration duration of the motor can reach the vibration duration included in the vibration parameter.

In an implementation of the first aspect, the controlling the vibrator chip to output the first voltage to the motor within the first duration, so that the amplitude of the motor reaches the maximum value when the first duration ends, controlling the vibrator chip to start to output the second voltage to the motor within the vibration duration when the first duration ends, so that the amplitude of the motor remains at the maximum value, and controlling the vibrator chip to start to output a third voltage to the motor when the vibration duration ends, so that the amplitude of the motor decreases from the maximum value to 0 within a second duration further includes: further includes: if the vibration duration is less than a second value, controlling the vibrator chip to output the first voltage to the motor within the first duration, so that the amplitude of the motor reaches the maximum value when the first duration ends, controlling the vibrator chip to start to output the second voltage to the motor within the vibration duration when the first duration ends, so that the amplitude of the motor remains at the maximum value, and controlling the vibrator chip to start to output the third voltage to the motor when the vibration duration ends, so that the amplitude of the motor decreases from the maximum value to 0 within the second duration. In this way, for vibration events with a vibration duration greater than or equal to the second value and vibration events with a vibration duration less than the second value, the terminal device may use different driving methods to control the motor to vibrate. For the vibration events with a vibration duration greater than or equal to the second value, the amplitude of the motor is affected by the vibration duration by a small degree. Therefore, the motor may be driven to rotate in a conventional manner. For the vibration events with a vibration duration less than the second value, the amplitude of the motor is affected by the vibration duration by a large degree, and a smaller vibration duration leads to a smaller amplitude of the motor. In other words, the user cannot easily sense vibrations. Therefore, the amplitude of the motor may be quickly caused to reach the maximum value, to reduce impact of vibration duration on the amplitude, so as to provide a clear vibration feeling to the user.

In an implementation of the first aspect, the first vibration event includes one of the following: a terminal device unlocking operation is received from a user, an online payment operation is received from the user, a face registration operation is received from the user, a skill releasing operation is received from the user, an incoming call request is received, and current time matches preset time.

In an implementation of the first aspect, the terminal device includes a first application, a vibrator service, a vibrator hardware abstraction layer HAL, and a vibrator drive. The vibrator HAL includes a type determining module, a first interface, and a second interface, and the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further includes: The first application sends a vibration request to the vibrator service in response to the first vibration event. The vibrator service sends the vibration request to the type determining module, where the vibration request includes the vibration parameter. The type determining module determines whether the motor is a linear motor. The type determining module sends the vibration request and a message indicating that the motor is a linear motor to the first interface when a type of the vibration parameter indicates that the vibrator interface is the first interface. The first interface sends the vibration request to the second interface. The second interface updates the vibration parameter based on the first parameter, where the first parameter is used to describe a vibration waveform generated by the motor through a vibration for the first duration under an action of the first voltage. The second interface, a first vibration parameter to the vibrator drive, where the first vibration parameter is a vibration parameter updated based on the first parameter. The vibrator drive writes the first vibration parameter into the vibrator chip. The vibrator chip outputs the first voltage to the motor within the first duration, so that the amplitude of the motor reaches the maximum value when the first duration ends, and starting to output the second voltage to the motor when the first duration ends, so that the amplitude of the motor remains at the maximum value.

In an implementation of the first aspect, that the second interface updates the vibration parameter based on the first parameter further includes: The second interface updates the vibration parameter based on the first parameter when the vibration parameter does not include the vibration duration.

In an implementation of the first aspect, the method further includes: The first application sends a vibration stop request to the vibrator service when the preset duration that starts from the receiving of the first vibration event ends. The vibrator service sends the vibration stop request to the first interface. The first interface sends a second parameter to the vibrator drive, where the second parameter is used to describe a vibration waveform generated by the motor through a vibration for the second duration under an action of the third voltage. The vibrator drive writes the second parameter into the vibrator chip. The vibrator chip outputs the third voltage to the motor, so that the amplitude of the motor decreases from the maximum value to 0 within the second duration.

In an implementation of the first aspect, the method further includes: The second interface starts a first timer to obtain a third duration in response to receiving the vibration request. The first interface stats a second timer to obtain a fourth duration in response to receiving the vibration stop request. That the first interface sends a second parameter to the vibrator drive includes: The first interface sends the second parameter to the vibrator drive when the actual vibration duration of the motor reaches the first value, where the first value is a difference between the third duration and the fourth duration.

In an implementation of the first aspect, the method further includes: The second interface updates the vibration parameter based on the first parameter and the second parameter when the vibration parameter includes the vibration duration, where the second parameter is used to describe a vibration waveform generated by the motor through a vibration for the second duration under an action of the third voltage. The second interface sends a second vibration parameter to the vibrator drive, where the second vibration parameter is a vibration parameter updated based on the first parameter and the second parameter. The vibrator drive writes the second vibration parameter into the vibrator chip. The vibrator chip outputs the first voltage to the motor within the first duration, so that the amplitude of the motor reaches the maximum value when the first duration ends, starts to output the second voltage to the motor within the vibration duration when the first duration ends, so that the amplitude of the motor remains at the maximum value, and starts to output the third voltage to the motor when the vibration duration ends, so that the amplitude of the motor decreases from the maximum value to 0 within the second duration. The third voltage and the second voltage are in opposite directions, and the absolute value of the third voltage is greater than the absolute value of the second voltage.

In an implementation of the first aspect, that the second interface updates the vibration parameter based on the first parameter and the second parameter when the vibration parameter includes the vibration duration further includes: The second interface updates the vibration parameter based on the first parameter and the second parameter when the vibration parameter includes the vibration duration and the vibration duration is less than the second value.

In an implementation of the first aspect, the method further includes: The first interface determines whether the vibration duration is less than the second value. That the first interface sends the vibration request to the second interface further includes: The first interface sends the vibration request to the second interface if the vibration duration is less than the second value.

In an implementation of the first aspect, that the first application sends a vibration request to the vibrator service in response to the first vibration event includes: The first application sends a motor turn-on request to the vibrator service in response to the first vibration event. The vibrator service detects whether the motor exists, and sends a detection result to the first application. The first application sends the vibration request to the vibrator service if the detection result indicates that the motor exists.

According to a second aspect, this application provides a chip system. The chip system includes one or more interface circuits and one or more processors. The interface circuit is connected to the processor through a line. The foregoing chip system may be applied to an electronic device including a communication module and a memory. The interface circuit is configured to receive a signal from a memory of the electronic device, and send the received signal to the processor. The signal includes computer instructions stored in the memory. When the processors execute the computer instructions, the electronic device may perform the method according to the first aspect and any possible design manner thereof.

According to a third aspect, this application provides a computer-readable storage medium. The computer-readable storage medium includes computer instructions. The computer instructions, when run on a terminal device (such as a mobile phone), cause the terminal device to perform the method according to the first aspect and any possible design manner thereof.

According to a fourth aspect, this application provides a computer program product. The computer program product, when run on a terminal device, causes the terminal device to perform the method according to the first aspect and any possible design manner thereof.

According to a fifth aspect, this application provides a terminal device. The terminal device includes a memory and one or more processors. The memory is coupled to the processor. The memory is configured to store computer program code, and the computer program code includes computer instructions. The computer instructions, when executed by the processor, cause the terminal device to perform the method according to the first aspect and any possible design manner thereof.

For technical effects brought by any design manner of the fourth aspect and the fifth aspect, refer to the technical effects brought by different design manners of the first aspect. The details are not described herein.

### BRIEF DESCRIPTION OF DRAWINGS

FIG. 1 is a waveform diagram of a driving voltage signal S1 and a vibration acceleration signal S2 of a linear motor;
FIG. 2 is a waveform diagram of a driving voltage signal S3 and a vibration acceleration signal S4 of the linear motor;
FIG. 3 is a schematic structural diagram of a terminal device according to an embodiment of this application;
FIG. 4 is a schematic architectural diagram of a software module of a terminal device according to an embodiment of this application;
FIG. 5 is a schematic diagram of an interaction between software modules according to an embodiment of this application;
FIG. 6 is a schematic flowchart I of a motor driving method according to an embodiment of this application;
FIG. 7 is a waveform diagram of a driving voltage signal S5 and a vibration acceleration signal S6 according to an embodiment of this application;
FIG. 8 is a schematic flowchart II of a motor driving method according to an embodiment of this application;
FIG. 9 is a schematic flowchart III of a motor driving method according to an embodiment of this application;
FIG. 10 is a time node diagram of a motor vibration process according to an embodiment of this application;
FIG. 11 A to FIG. 11C are a schematic flowchart IV of a motor driving method according to an embodiment of this application; and
FIG. 12 is a time node diagram of another motor vibration process according to an embodiment of this application.

### DESCRIPTION OF EMBODIMENTS

Example embodiments of this application are described below with reference to drawings, which include various details of embodiments of this application to facilitate understanding, and therefore should be merely considered as examples. Therefore, a person of ordinary skill in the art should be aware that a variety of changes and modifications may be made to embodiments described herein without departing from the scope and spirit of this application. Similarly, for clarity and conciseness, descriptions of well-known functions and structures are omitted in the following description.

For clarity and brevity of the following embodiments, the related art is briefly described first.

Non-linear motor: It is also referred to as a rotor motor. The rotor motor may include an iron core motor and a flat motor, which generate a vibration by the fact that rotation of an energized shaft drives an eccentric mass (which may also be referred to as a rotor) on the shaft to rotate.

Linear motor: It is a mechanism in which a changing electromagnetic field generated through a pulse voltage signal drives magnetic steel to drive a mass block to periodically move. A vibration intensity of the linear motor varies with a frequency and an amplitude of a pulse voltage signal.

Resonant frequency: It may also be referred to as a natural frequency, which refers to a frequency that can cause a linear motor to resonate. When a frequency of a driving voltage is the resonant frequency, the linear motor may vibrate at the resonant frequency and have a maximum amplitude, that is, has a maximum vibration intensity.

Currently, in addition to a sound prompt manner, a terminal may further prompt a user through a vibration to improve user experience of the terminal. For example, in a conference scenario, when a user performs operations on a mobile phone, the mobile phone may prompt the user through vibrations, to avoid interference of a prompt tone of the mobile phone on another user in the conference scenario. For another example, when a mobile phone receives an incoming call request, the mobile phone may prompt a user through both ringing and vibrations, to prompt the user to make a response to the incoming call request in time. Particularly, when a user performs operations in a terminal, the terminal may provide vibration feedback in time when detected an operation of the user, to improve user experience. In some scenarios, the terminal vibrates for a short time. In other words, the terminal performs a short-time vibration. In this case, the terminal cannot vibrate for an excessively long time, to avoid impact on the user experience. In other words, the linear motor in the terminal needs to quickly start/stop.

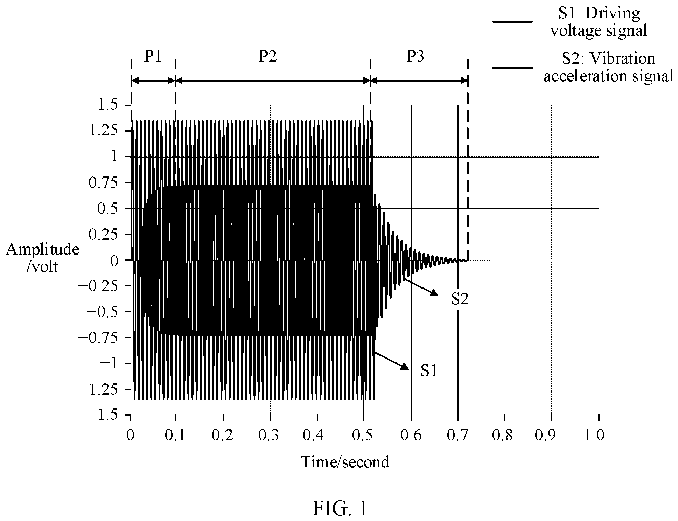

However, to adapt to both the non-linear motor and the linear motor, some third-party applications may invoke a universal vibrator interface provided by an operating system to deliver a vibration parameter when having a vibration demand, so that the vibrator chip outputs a driving voltage of a rated frequency and a rated voltage to drive the motor to vibrate. FIG. 1 is a waveform diagram of a driving voltage signal S1 and a vibration acceleration signal S2 of a linear motor. The driving voltage signal S1 is a driving voltage outputted by a vibrator chip to the linear motor, which lasts for a duration in a range of 0 ms to 500 ms. The vibration acceleration signal S2 is used to indicate a vibration acceleration generated by the linear motor under an action of the driving voltage signal S1. In addition, a frequency of the driving voltage signal S1 is a resonant frequency f0 of the linear motor, and correspondingly, a frequency of the vibration acceleration signal S2 is the resonant frequency f0 of the linear motor. It may be learned from FIG. 1 that, under the action of the driving voltage signal S1, a vibration process of the linear motor from starting to stopping may include three phases: a starting phase P1, a steady state phase P2, and a braking phase P3. In the starting phase P1 and the steady state phase P2, the vibrator chip stably outputs the driving voltage signal S1. After the outputting of the driving voltage signal S1 is stopped, the braking phase P3 is started. In the starting phase P1 (from the 0^{th} ms to the 80^{th} ms), an amplitude of the vibration acceleration signal S2 increases from 0 to a maximum value (for example, 0.65 V), indicating that a starting amplitude of the linear motor gradually increases. In the steady state phase P2 (from the 80^{th} to the 500^{th} ms), the amplitude of the vibration acceleration signal S6 continuously remains at a maximum value, indicating that the amplitude of the linear motor remains at the maximum value. In the braking phase P3 (from the 500^{th} to the 710^{th} ms), the amplitude of the vibration acceleration signal S2 gradually decreases from the maximum value to 0, indicating that the linear motor performs a damping vibration until the vibration stops.

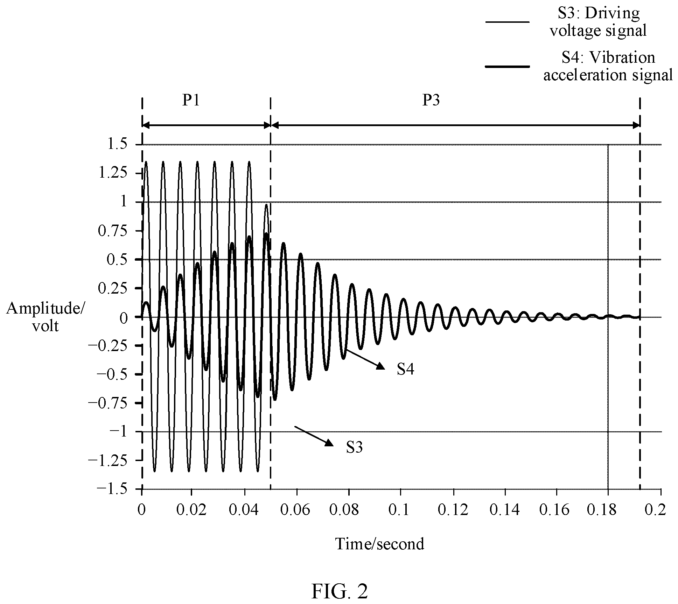

It may be learned that, under the action of the driving voltage, the amplitude (which may also be referred to as a vibration intensity) of the linear motor gradually increases with time to the maximum value and remains at the maximum value. When the driving voltage is not received, the linear motor ends the vibration through the damping oscillation. In scenarios in which the linear motor needs to start/stop quickly, the vibration needs to be stopped before the vibration intensity of the linear motor reaches a maximum value. For example, FIG. 2 is a waveform diagram of a driving voltage signal S3 and a vibration acceleration signal S4 of the linear motor. The driving voltage signal S3 is a driving voltage outputted by a vibrator chip to the linear motor, which lasts for a duration in a range of 0 ms to 50 ms. The vibration acceleration signal S4 is used to indicate a vibration acceleration generated by the linear motor under an action of the driving voltage signal S3. It may be learned from FIG. 2 that, the vibrator chip starts to output the driving voltage signal S3 to the linear motor at the 0^{th} second, and stops outputting the driving voltage signal S3 at the 50^{th} ms. In addition, an amplitude of the vibration acceleration signal S4 gradually increases from the 0^{th} ms to the 50^{th} ms, and starts to gradually decrease at the 50^{th} ms until the amplitude reaches 0. It may be learned through comparison between FIG. 1 and FIG. 2 that, the linear motor first enters the starting phase P1 (from the 0^{th} ms to the 50^{th} ms) under the action of the driving voltage signal S3, and then directly enters the braking phase P3 (from the 50^{th} to the 189^{th} ms) when the driving voltage signal S3 disappears. In other words, the vibration amplitude of the linear motor starts to decrease before reaching the maximum value.

It may be learned that, in the scenarios in which the linear motor needs to quickly start/stop, the prior art cannot prompt a user through vibrations as a result of the user failing to sense the vibrations due to an excessively small amplitude when the linear motor quickly starts/stops.

Based on the above, this application provides a motor driving method, which is applied to a terminal device including a linear motor. The terminal device may provide a first voltage to the linear motor when the linear motor starts, so that an amplitude of the linear motor quickly reaches a maximum value under an action of the first voltage. In this way, the linear motor can vibrate at the maximum amplitude, so that a user can easily sense the vibration, thereby effectively prompting the user and improving user experience.

It should be noted that, the terminal device in this embodiment may be a mobile phone, a tablet computer, a personal communication service (personal communication service, PCS) phone, a virtual reality (VR) terminal device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. This is not specifically limited herein.

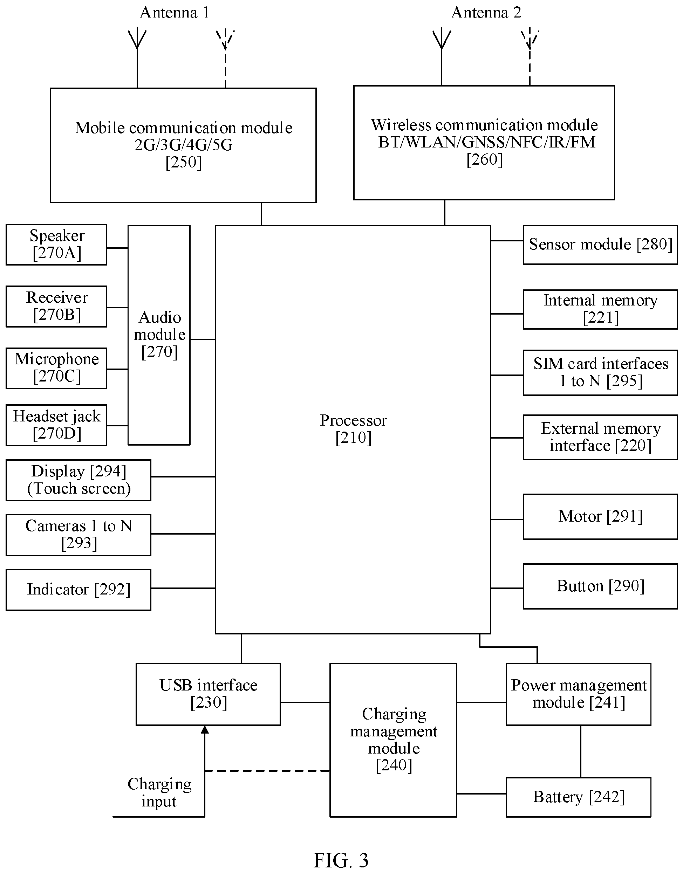

FIG. 3 is a schematic structural diagram of a terminal device according to an embodiment of this application. As shown in FIG. 3, the terminal device may include a processor 210, an external memory interface 220, an internal memory 221, a universal serial bus (universal serial bus, USB) interface 230, a charging management module 240, a power management unit 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. The processor 210 may be a nerve center and command center of the terminal device. The processor 210 may generate an operation control signal based on instruction operation code and a timing signal, and control instruction obtaining and instruction execution.

A memory may be further arranged in the processor 210 to store instructions and data. In some embodiments, the memory of the processor 210 is a cache. The memory may store instructions or data recently used or cyclically used by the processor 210. If the processor 210 needs to use the instructions or the data again, the processor may directly invoke the instructions or the data from the memory. This avoids repeated access, and reduces a waiting time of the processor 210, and therefore improves system efficiency.

In some embodiments, the processor 210 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The external memory interface 220 may be configured to connect to an external storage card such as a micro SD card, to expand a storage capability of the terminal device. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The processor 210 runs the instructions stored in the internal memory 221, to execute various functional applications and data processing of the terminal device. For example, in this embodiment of this application, the processor 210 may execute the instructions stored in the internal memory 221. The internal memory 221 may include a program storage area and a data storage area.

The program storage area may store an operating system, an application required by at least one function (such as a sound playback function and an image display function), a configuration file of the motor 291, and the like. The data storage area may store data (such as audio data and an address book) created during use of the terminal device, and the like. In addition, the internal memory 221 may include a high-speed random access memory, and may further include a non-volatile memory, for example, at least one disk storage device, a flash memory device, and a universal flash storage (universal flash storage, UFS).

The charging management module 240 is configured to receive a charging input from a charger. The charger may be a wireless charger or a wired charger. The charging management module 240 may supply power to the terminal device through the power management module 241 while charging the battery 242.

The power management module 241 is configured to connect to the battery 242, the charging management module 240, and the processor 210. The power management module 241 receives an input from the battery 242 and/or the charging management module 240, to supply power to the processor 210, the internal memory 221, the external memory, the display 294, the camera 293, the wireless communication module 260, and the like. In some embodiments, the power management module 241 and the charging management module 240 may be arranged in a same device.

A wireless communication function of the terminal device may be implemented through the antenna 1, the antenna 2, the mobile communication module 250, the wireless communication module 260, the modem processor, the baseband processor, and the like. In some embodiments, in the terminal device, the antenna 1 is coupled to the mobile communication module 250, and the antenna 2 is coupled to the wireless communication module 260, so that the terminal device may communicate with a network and another device through a wireless communication technology.

The antenna 1 and the antenna 2 are configured to transmit and receive an electromagnetic wave signal. Each antenna in the terminal device may be configured to cover one or more communication frequency bands. Different antennas may be multiplexed to improve utilization of the antennas. For example, the antenna 1 may be multiplexed into a diversity antenna of a wireless local area network. In some other embodiments, the antenna may be used together with a tuning switch.

The mobile communication module 250 may provide a wireless communication solution applied to the terminal device, including 2G/3G/4G/5G and the like. The mobile communication module 250 may include at least one filter, a switch, a power amplifier, and a low noise amplifier (low noise amplifier, LNA), and the like. The mobile communication module 250 may receive an electromagnetic wave through the antenna 1, perform processing such as filtering and amplification on the received electromagnetic wave, and send the electromagnetic wave to the modem processor for demodulation.

The mobile communication module 250 may further amplify a signal modulated by the modem processor, and convert the signal into an electromagnetic wave through the antenna 1 for radiation. In some embodiments, at least some functional modules of the mobile communication module 250 may be arranged in the processor 210. In some embodiments, at least some functional modules of the mobile communication module 250 and at least some modules of the processor 210 may be arranged in a same device.

The wireless communication module 260 may provide wireless communication solutions applied to the terminal device, including WLAN (for example, a (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC), an infrared (infrared, IR) technology, and the like.

The wireless communications module 260 may be one or more devices to which at least one communication processing module is integrated. The wireless communication module 260 receives an electromagnetic wave through the antenna 2, performs frequency modulation and filtering on the electromagnetic wave signal, and sends the processed signal to the processor 210. The wireless communication module 260 may further receive a to-be-sent signal from the processor 210, perform frequency modulation and amplification on the to-be-sent signal, and convert the to-be-sent signal into an electromagnetic wave for radiation through the antenna 2.

The terminal device may implement an audio function, for example, music playback and recording, through the audio module 270, the speaker 270A, the receiver 270B, the microphone 270C, the headset jack 270D, the application processor, and the like.

The sensor module 280 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor. The terminal device may collect various data through the sensor module 280.

The terminal device implements a display function through the GPU, the display 294, the application processor, and the like. The GPU is a microprocessor for image processing, and is connected to the display 294 and the application processor. The GPU is configured to perform mathematical and geometric computations for graphics rendering. The processor 210 may include one or more GPUs, and is configured to execute program instructions to generate or change display information.

The display 294 is configured to display an image, a video, and the like. The display 294 includes a display panel.

The terminal device may implement a photographing function through the ISP, the camera 293, the video codec, the GPU, the display 294, the application processor, and the like. The ISP is configured to process data fed back by the camera 293. The camera 293 is configured to capture a still image or a video. In some embodiments, the terminal device may include 1 or N cameras 293, where N is a positive integer greater than 1.

The button 290 includes a power button, a volume button, and the like. The button 290 may be a mechanical button, or a touch button. The motor 291 may generate a vibration prompt. The motor 291 may be configured to provide an incoming call vibration prompt, or may be configured to provide touch vibration feedback. The indicator 292 may be an indicator light, and may be configured to indicate a charging state or a change in a state of charge, or may be configured to indicate a message, a missed call, a notification, and the like. The SIM card interface 295 is configured to connect to a SIM card. The SIM card may be inserted into the SIM card interface 295 or removed from the SIM card interface 295, to contact or be separated from the terminal device. The terminal device supports 1 or N SIM card interfaces, where N is a positive integer greater than 1. The SIM card interface 295 supports a nano SIM card, a micro SIM card, a SIM card, and the like.

It may be understood that the interface connection relationship between the modules shown in this embodiment is merely an example, and does not constitute a limitation on the structure of the terminal device. In some other embodiments, the terminal device may include more or fewer modules than those provided in the foregoing embodiment, and the modules may use an interface connection manner different from that in the foregoing embodiment, or use a combination of a plurality of interface connection manners.

A software system of the foregoing terminal device may use a hierarchical architecture, an event-driven architecture, a microcore architecture, a micro service architecture, or a cloud architecture. In this embodiment of this application, the software structure of the terminal device is described by using a hierarchical architecture of an Android system as an example.

In the hierarchical architecture, software is divided into a plurality of layers, and each layer has a clear role and task. The layers communicate with each other through an interface. In some embodiments, the Android system may include an application layer, an application framework layer, Android runtime (Android runtime), a system library, a hardware abstraction layer (hardware abstraction layer, HAL), and a kernel layer. It should be noted that, this embodiment of this application is described by using the Android system as an example. In another operating system (such as the Harmony system and the IOS system), the solution of this application can also be implemented if functions implemented by the functional modules are similar to those in this embodiment of this application.

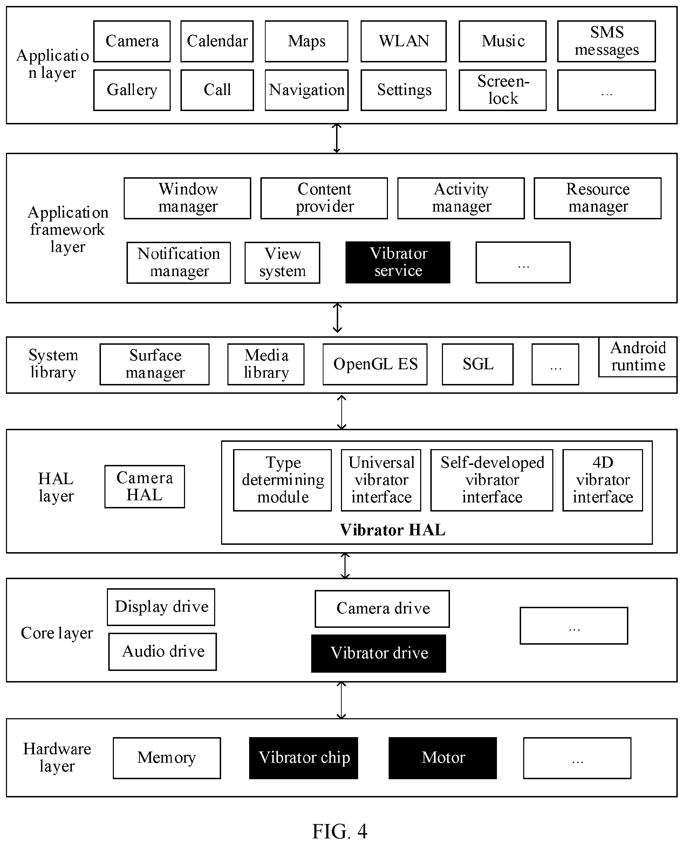

The application layer may include a series of application packages. As shown in FIG. 4, the application packages may include applications such as a camera application, gallery, calendar, phone, maps, navigation, WLAN, settings, music, a screen-lock application, and SMS messages. Certainly, the application layer may further include another application package, for example, a third-party application such as a payment application, a shopping application, a bank application, a chat application, or a money management application. This is not limited in this application.

The application framework layer provides an application programming interface (application programming interface, API) and a programming framework for the applications at the application layer. The application framework layer includes predefined functions. For example, the application framework layer may include an activity manager, a window manager, a content provider, a view system, a resource manager, a notification manager, a vibrator service (vibrator service), and the like. This is not limited in this embodiment of this application. The vibrator service is used to provide a supported vibration-related service.

The system library may include a plurality of functional modules, such as a surface manager (surface manager), a media library (media libraries), an OpenGL ES, and an SGL.

The surface manager is configured to manage a display subsystem, and provide fusion of 2D and 3D layers for a plurality of applications.

The media library supports playback and recording in a plurality of common audio and video formats, and supports static image files, and the like. The media library supports a plurality of audio/video encoding formats, such as MPEG4, H.264, MP3, AAC, AMR, JPG, and PNG.

The OpenGL ES is configured to implement three-dimensional graphics drawing, image rendering, synthesis, layer processing, and the like.

The SGL is a drawing engine for 2D drawing.

The android runtime (android runtime) includes a core library and a virtual machine. The android runtime is responsible for scheduling and managing the Android system. The core library includes two parts: a performance function that needs to be invoked by a java language and a core library of Android. The application layer and the application framework layer run in the virtual machine. The virtual machine executes Java files of the application layer and the application framework layer as binary files. The virtual machine is configured to perform functions such as object lifecycle management, stack management, thread management, security and anomaly management, and garbage collection.

The HAL layer is a package for a Linux kernel driver. It provides an interface to a higher-level layer, and shields implementation details of underlying hardware.

The HAL layer may include a vibrator HAL (vibrator HAL), a camera HAL (camera HAL), and the like.

The vibrator HAL may include a type determining module, a universal vibrator interface, a self-developed vibrator interface, a 4D vibrator interface, and the like. The type determining module may determine whether a motor is a linear motor or a non-linear motor by reading a configuration file of the motor.

The universal vibrator interface, the self-developed vibrator interface, and the 4D vibrator interface all may interact with the vibrator drive of the kernel layer, except that the three vibrator interfaces can process different vibration parameters. For specific content of the vibration parameters processed by the three vibrator interfaces, refer to S604 and related descriptions. The details are not described herein.

The kernel layer is a layer between hardware and software. The kernel layer includes at least a display drive, an audio drive, a camera drive, a vibrator drive, and the like. The vibrator drive is a program that allows advanced computer software to interact with hardware, that is, a set of programs that drive a motor to operate.

The hardware layer includes a memory, a vibrator chip, a motor, and the like. The vibrator chip is configured to output a driving voltage to the motor to drive the motor to vibrate. The motor is configured to vibrate to provide a vibration feeling to a user.

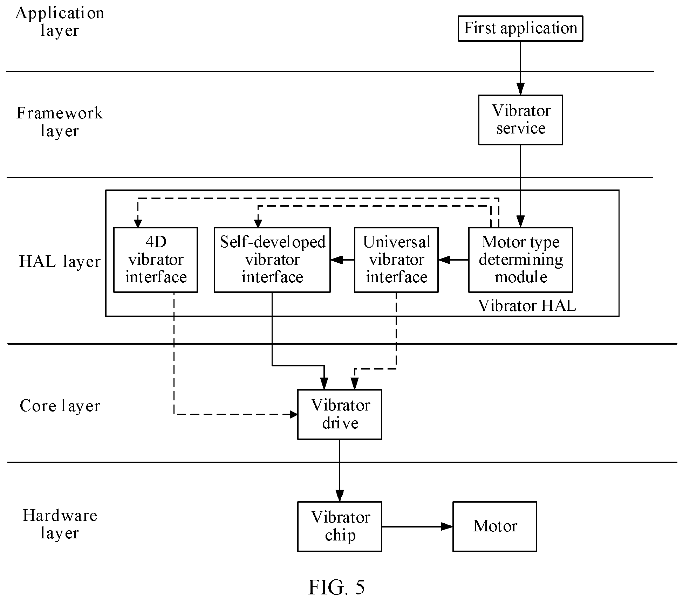

Software modules and interactions between the modules involved in the motor driving method provided in embodiments of this application are described below. As shown in FIG. 5, a first application in the application layer may interact with a vibrator service in the application framework layer by invoking a preset application programming interface (application programming interface, API), and the vibrator service may interact with the vibrator HAL in the HAL layer. The vibrator HAL may include a type determining module, a universal vibrator interface, a self-developed vibrator interface, and a 4D vibrator interface. The type determining module may read configuration information of the motor to determine a type of the motor (including a linear motor and a non-linear motor). When it is determined that the motor type is a linear motor, the type determining module may interact with the vibrator drive of the kernel layer through the universal vibrator interface and the self-developed vibrator interface, or may directly interact with the vibrator drive of the kernel layer through the self-developed vibrator interface or the 4D vibrator interface. When it is determined that the motor type is a non-linear motor, the type determining module may directly interact with the vibrator drive of the kernel layer through the universal vibrator interface. The vibrator drive may configure the vibrator chip in the hardware layer, so that the vibrator chip outputs a driving voltage to drive the motor to vibrate.

The motor driving method provided in this application is described below with reference to the drawings.

In an optional implementation, the terminal device receives a first vibration event, where the first vibration event is used to trigger the motor to vibrate. The first vibration event includes: a terminal device unlocking operation is received from a user, an online payment operation is received from the user, a face registration operation is received from the user, a skill releasing operation is received from the user, an incoming call request is received, and current time matches preset time, and the like.

In response to the first vibration event, the vibrator chip is controlled to output a first voltage to the motor within a first duration, so that an amplitude of the motor reaches a maximum value when the first duration ends, and the vibrator chip is controlled to start to output a second voltage to the motor when the first duration ends, so that the amplitude of the motor remains at the maximum value. The first voltage and the second voltage are in a same direction, and an absolute value of the first voltage is greater than an absolute value of the second voltage. The first voltage and the second voltage are both alternating currents. That the absolute value of the first voltage is greater than the absolute value of the second voltage may mean that an amplitude of the first voltage is greater than an amplitude of the second voltage. That the first voltage and the second voltage are in a same direction may mean that the first voltage and the second voltage have a same current direction when the first duration ends.

In this way, the amplitude of the motor can quickly reach the maximum value under an action of the first voltage, and remain at the maximum value under an action of the second voltage. In other words, the amplitude of the motor can reach the maximum value even in a very short vibration duration, to bring an obvious vibration feeling to a user, thereby improving user experience.

In this embodiment, the terminal device may obtain a vibration parameter of the motor in response to the first vibration event. The vibration parameter is used to indicate a vibration mode of the motor. This application may provide different methods for driving the motor to vibrate depending on whether the vibration parameter includes or does not include a vibration duration.

In an optional implementation, when the vibration parameter includes the vibration duration, the terminal device may control the vibrator chip to output the first voltage to the motor within the first duration, so that the amplitude of the motor reaches the maximum value when the first duration ends, and the terminal device may further control the vibrator chip to start to output the second voltage to the motor within the vibration duration when the first duration ends, so that the amplitude of the motor remains at the maximum value, and control the vibrator chip to start to output a third voltage to the motor when the vibration duration ends, so that the amplitude of the motor decreases from the maximum value to 0 within the second duration. The third voltage and the second voltage are in opposite directions, and an absolute value of the third voltage is greater than the absolute value of the second voltage. It may be understood that the third voltage is also an alternating current. That the third voltage and the second voltage are in opposite directions may mean that the third voltage and the second voltage have a same current direction when the vibration duration ends. That an absolute value of the third voltage is greater than the absolute value of the second voltage may mean that an amplitude of the third voltage is greater than the amplitude of the second voltage.

When the vibration parameter does not include the vibration duration, the terminal device may control the vibrator chip to output the first voltage to the motor within the first duration, so that the amplitude of the motor reaches the maximum value when the first duration ends, and control the vibrator chip to start to output the second voltage to the motor when the first duration ends, so that the amplitude of the motor remains at the maximum value.

It may be understood that, since the terminal device learns a duration for which the motor needs to vibrate when the vibration parameter includes the vibration duration, the terminal device may control the vibrator chip to start to output the second voltage to the motor within the vibration duration when the first duration ends, so that the actual vibration duration of the motor can reach the vibration duration included in the vibration parameter. When the vibration parameter does not include the vibration duration, the terminal device does not know the duration for which the motor needs to vibrate, and therefore may control the motor to quickly start, and then control the motor to stop vibrating.

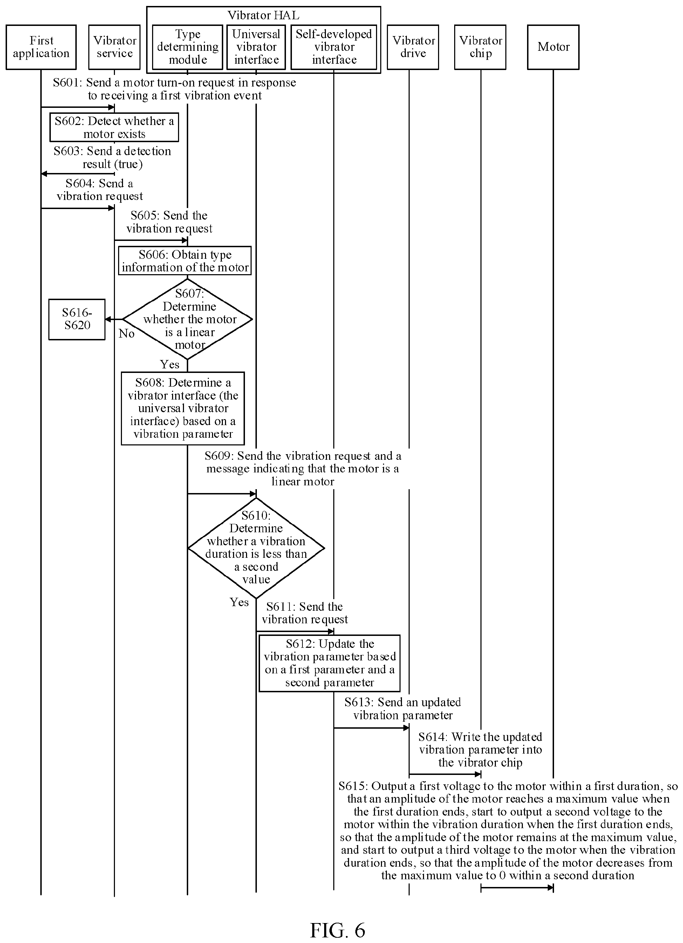

To implement the motor driving method provided in this application, this application provides a motor driving method to explain a process in which the terminal device controls the motor to vibrate when the vibration parameter includes the vibration duration. Refer to FIG. 6. FIG. 6 is a schematic flowchart I of a motor driving method according to this application. The motor driving method includes the following steps:
S601: A first application sends a motor turn-on request to a vibrator service in response to receiving a first vibration event.

The first application may receive the first vibration event, and send the motor turn-on request to the vibrator service after receiving the first vibration event. The first vibration event may vary depending on an actual application scenario. For example, when the first application is a screen-lock application, the first vibration event may be that a terminal device unlocking operation performed through a virtual button is received from a user. For another example, when the first application is a game application, the first vibration event may be that a skill releasing operation is received from the user. For another example, when the first application is a call application, the first vibration event may be that an incoming call request is received. For another example, when the first application is an alarm clock application, the first vibration event may be that current time is consistent with preset time set by the user.

The first application may invoke a preset API interface to send the motor turn-on request to the vibrator service.

S602: The vibrator service detects whether a motor exists.

Optionally, the vibrator service detects whether the motor exists in the terminal device through a vibrator.hasVibrator() function.

It may be understood that the first application does not know whether the terminal device includes the motor. Therefore, it needs to be determined whether the motor exists in the terminal device before sending of a vibration request.

S603: The vibrator service sends a detection result to the first application.

The detection result may include true (true) or false (false). If the detection result is false, the vibrator service notifies the first application that no motor exists in the terminal device. If the detection result is true, the vibrator service notifies the first application that the motor exists in the terminal device, and S604 and subsequent steps may be performed.

Optionally, the vibrator service may further detect whether the motor is in an idle state. The detection result further includes information indicating that the motor is in the idle state or not in the idle state. If the detection result indicates that the motor exists in the terminal device and that the motor is in the idle state, the first application may perform S604 and the subsequent steps. If the detection result indicates that no motor exists in the terminal device or that the motor is in a non-idle state, the first application may determine that the motor is unavailable.

S604: The first application sends a vibration request to the vibrator service.

The vibration request carries a vibration parameter. The vibration parameter is used to indicate a vibration mode required by the first application. In this embodiment, content included in the vibration parameter may vary depending on a vibrator interface invoked by the first application. The vibrator interface invoked by the first application may include a universal vibrator interface (which may also be referred to as a first interface), a native vibrator interface (which may also be referred to as a second interface), and a 4D vibrator interface.

The universal vibrator interface may also be referred to as a Google vibrator interface, which may control a linear motor and a non-linear motor through a vibrator drive. For an application that invokes the universal vibrator interface, a vibration parameter sent by the application may include parameters that can be used by both the linear motor and the non-linear motor, such as a vibrator type, a vibration duration, and a sleep duration. The sleep duration may refer to a time interval between two vibrations.

The native vibrator interface is a vibrator interface developed by a device manufacturer, which may control a linear motor through a vibrator drive. For an application that invokes the native vibrator interface, a vibration parameter sent by the application may include information such as a vibration waveform name and a sleep duration. The terminal device stores a description file of various vibration waveforms predesigned by a developer. Each vibration waveform has a different name. The native vibrator interface may find out a corresponding description file by using a received vibration waveform name, and parse the description file to obtain vibration waveform data. The vibration waveform data is used to describe a vibration waveform. The vibration mode is complex and cannot be implemented by using the non-linear motor.

The 4D vibrator interface may be a vibrator interface jointly developed by a device manufacturer and a third party, which may control a linear motor through a vibrator drive. For an application that invokes the 4D vibrator interface, a vibration parameter sent by the application includes a waveform ID, waveform file data, and the like. The waveform file data is used to indicate a storage address of a description file. Similar to the vibration mode implemented by the native vibrator interface, the vibration mode implemented by the 4D vibrator interface is complex and is inapplicable to the non-linear motor.

The first application may invoke the preset API interface to send the vibration request to the vibrator service.

S605: The vibrator service sends the vibration request to a type determining module.

For a description of the vibration request, refer to the relevant content of S604. The details are not described herein.

S606: The type determining module obtains type information of the motor.

In this embodiment, the type determining module may read a configuration file from a preset storage address. The configuration file includes configuration information of the motor. The configuration information may include information such as a motor type and a resonant frequency of the motor. The motor type may include a linear motor (for example, identified as 1) and a non-linear motor (for example, identified as 2).

S607: The type determining module determines whether the motor is a linear motor.

For example, if the type information of the motor is 1, the type determining module may determine that the motor is a linear motor. If the type information of the motor is 2, the type determining module may determine that the motor is a non-linear motor.

A description is provided below by using an example in which the type determining module determines that the motor is a linear motor. After S607, the method further includes S608-S615:
S608: The type determining module determines a vibrator interface based on a vibration parameter.

Specifically, the type determining module may determine the vibrator interface based on a type of the vibration parameter. For example, if the vibration parameter includes the vibration duration and the sleep duration, it may be determined that the vibrator interface is the universal vibrator interface. If the vibration parameter includes the vibration waveform name and the sleep duration, it may be determined that the vibrator interface is the native vibrator interface. If the vibration parameter includes the waveform ID and the waveform file data, it may be determined that the vibrator interface is the 4D vibrator interface.

A description is provided below by using an example in which the type determining module determines that the vibrator interface is the universal vibrator interface.

S609: The type determining module sends the vibration request and a message indicating that the motor is a linear motor to a universal vibrator interface.

S610: The universal vibrator interface determines whether a vibration duration is less than a second value.

The second value may be a duration required for the linear motor to change from an amplitude of 0 to a maximum value under an action of a rated voltage determined based on a plurality of tests. For example, the second value may be 100 milliseconds.

In this embodiment, if the universal vibrator interface determines that the vibration duration is less than the second value, S611 may be performed. If the universal vibrator interface determines that the vibration duration is greater than or equal to the second value, the universal vibrator interface may directly send the vibration request to the vibrator drive, to control the motor to vibrate through the vibrator drive. For example, after receiving the vibration request, the vibrator drive may directly control a vibrator chip to output a second voltage to the motor, so that the motor vibrates based on the waveform diagram shown by the vibration acceleration signal S2 in FIG. 1.

S611: The universal vibrator interface sends the vibration request to a self-developed vibrator interface.

S612: The self-developed vibrator interface updates the vibration parameter based on a first parameter and a second parameter.

The first parameter is used to describe a vibration waveform generated by the linear motor through a vibration for a first duration under an action of a first voltage. The first voltage is used to increase an amplitude of the motor from 0 to the maximum value within the first duration. The second parameter is used to describe a vibration waveform generated by the linear motor through a vibration for a second duration under driving of a third voltage. The third voltage is used to reduce the amplitude of the motor from the maximum value to 0 within the second duration. Optionally, the first duration and the second duration may be 1 to 1.5 (including 1 and 1.5) times a resonant period. The first duration and the second duration may be the same or different. This is not specifically limited herein. The resonant period is a reciprocal of a natural frequency of the linear motor. The first voltage may be a voltage value that is obtained based on a plurality of tests and can cause the linear motor to vibrate to the maximum amplitude within the first duration. The third voltage may be a voltage value that is obtained based on a plurality of tests and can cause the vibration amplitude of the linear motor to change from the maximum value to 0 (so that the linear motor quickly stops vibrating) within the second duration.

S613: The self-developed vibrator interface sends an updated vibration parameter (which may also be referred to as a second vibration parameter) to a vibrator drive.

S614: The vibrator drive writes the updated vibration parameter into a vibrator chip.

S615: The vibrator chip outputs a first voltage to the motor within a first duration, so that an amplitude of the motor reaches a maximum value when the first duration ends, starts to output a second voltage to the motor within the vibration duration when the first duration ends, so that the amplitude of the motor remains at the maximum value, and starts to output a third voltage to the motor when the vibration duration ends, so that the amplitude of the motor decreases from the maximum value to 0 within the second duration.

An absolute value of the first voltage is greater than an absolute value of the second voltage. An absolute value of the third voltage is greater than the absolute value of the second voltage. The first voltage and the second voltage are in a same direction. The third voltage and the second voltage are in opposite directions. In other words, the vibrator chip first outputs the first voltage for the first duration, then outputs the second voltage for the vibration duration, and finally outputs the third voltage for the second duration.

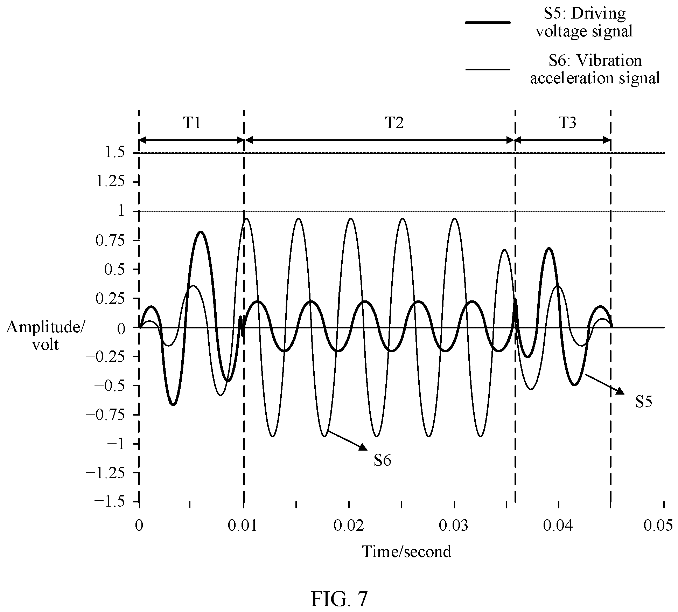

FIG. 7 is a waveform diagram of a driving voltage signal S5 and a vibration acceleration signal S6. The driving voltage signal S5 is a driving voltage outputted by the vibrator chip. The vibration acceleration signal S6 is a vibration acceleration generated by the linear motor under an action of the driving voltage signal S1. As shown in FIG. 7, the first duration may be 10 milliseconds, the vibration duration may be 26 milliseconds, and a third duration may be 9 milliseconds. The driving voltage signal S5 outputs a first voltage in a period T1, outputs a second voltage in a period T2, and outputs a third voltage in a period T3. Under an action of the first voltage, an amplitude of the vibration acceleration signal S6 reaches a maximum value in an excessively short time (for example, 10 milliseconds), indicating that the amplitude of the linear motor reaches a maximum value from 0 in 10 milliseconds. Under an action of the second voltage, an amplitude of a vibration acceleration signal S6 continuously remains at the maximum value, indicating that the amplitude of the motor remains at the maximum value. Under an action of the third voltage, the amplitude of the vibration acceleration signal S6 decreases from the maximum value to 0 in an excessively short time (for example, 9 milliseconds), indicating that the motor quickly stops vibrating.

It may be learned that, when the vibration parameter includes the vibration duration, the terminal device may first determine whether the vibration duration is less than the second value. If the vibration duration is less than a second value, the vibrator chip is controlled to output the first voltage to the motor within the first duration, so that the amplitude of the motor reaches the maximum value when the first duration ends, the vibrator chip is controlled to start to output the second voltage to the motor within the vibration duration when the first duration ends, so that the amplitude of the motor remains at the maximum value, and the vibrator chip is controlled to start to output the third voltage to the motor when the vibration duration ends, so that the amplitude of the motor decreases from the maximum value to 0 within the second duration. In this way, the amplitude of the linear motor can quickly reach the maximum value under the action of the first voltage and remains at the maximum value under the action of the second voltage, so that the user can easily sense the vibration, thereby improving the user experience, and a problem that the user cannot the vibration as a result of a small amplitude of the motor caused by a short vibration duration is avoided. In addition, after the actual vibration duration of the motor reaches the vibration duration required by the first application, the terminal device may output a high voltage (that is, the third voltage) opposite to an original driving voltage (that is, the second voltage), so that the motor quickly stops vibrating, thereby reducing vibration smearing, and avoiding discomfort caused by the vibration smearing to the user.

In an optional implementation, the terminal device may not need to determine whether the vibration duration is less than the second value. Instead, after the first vibration event is received, the vibrator chip is directly controlled to output the first voltage to the motor within the first duration, so that the amplitude of the motor reaches the maximum value when the first duration ends, and the vibrator chip is controlled to start to output the second voltage to the motor within the vibration duration when the first duration ends, so that the amplitude of the motor remains at the maximum value, and start to output the third voltage to the motor when the vibration duration starts, so that the amplitude of the motor decreases from the maximum value to 0 within the second duration. In this case, the flowchart shown in FIG. 6 may not include S610. In other words, after receiving the vibration request sent by the type determining module, the universal vibrator interface may directly send the vibration request to the self-developed vibrator interface without determining whether the vibration duration is less than the second value, and perform S612 and the subsequent steps. It is determined whether the vibration duration is less than the second value through S610. It may be determined in advance whether the terminal device may have a problem that a vibration feeling is not obvious as a result of an insufficient vibration duration. If the terminal device determines that the vibration duration is less than the second value, it indicates that the problem that a vibration feeling is not obvious as a result of an excessively short vibration duration exists. Therefore, the first voltage may be outputted to increase the amplitude of the motor from 0 to the maximum value in a short period of time (for example, the first duration). If the terminal device determines that the vibration duration is greater than or equal to the second value, it indicates that the vibration duration may be sufficient so that the user can sense the vibration. In this case, the motor does not need to quickly reach the maximum amplitude. In this manner, the user can feel a clear vibration feeling, and a waste of resources caused by an unnecessary process can be avoided.

It should be noted that, if the type determining module determines that the vibrator interface is the native vibrator interface or the 4D vibrator interface in S608, the type determining module may send the vibration request to the corresponding vibrator interface. After receiving the vibration request, the corresponding vibrator interface may directly send the vibration parameter to the vibrator drive, and the vibrator drive writes the vibration parameter into the vibrator chip, so that the vibrator chip outputs the voltage based on the configuration of the vibration parameter to achieve vibration of the motor.

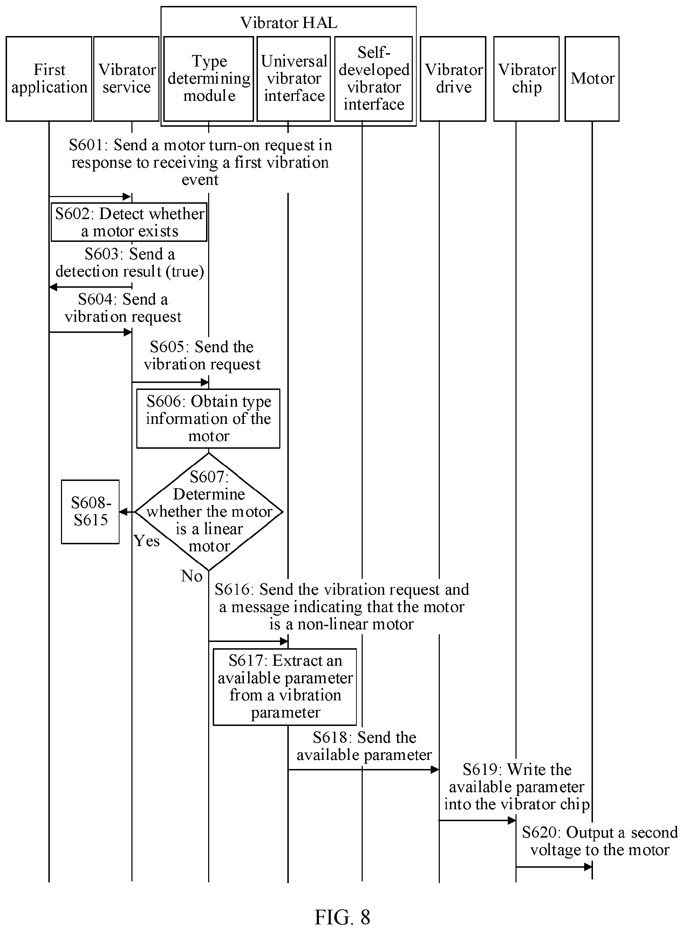

In an optional implementation, the motor may be a non-linear motor. A description is provided below by using an example in which the type determining module determines that the motor is a non-linear motor with reference to FIG. 8. FIG. 8 is a schematic flowchart II of a motor driving method according to this application. As shown in FIG. 8, after S607, the motor driving method further includes S616 to S620.

S616: The type determining module sends the vibration request and a message indicating that the motor is a non-linear motor to the universal vibrator interface.

For a description of the vibration request, refer to the relevant content of S604. The details are not described herein.

S617: The universal vibrator interface extracts an available parameter from the vibration parameter.

The available parameter may include a parameter applicable to the non-linear motor, such as a vibration duration and a sleep duration. Specifically, the universal vibrator interface may eliminate a parameter inapplicable to the non-linear motor from the vibration parameter, and retain the parameter applicable to the non-linear motor, to achieve control of the non-linear motor. It should be noted that, the parameter applicable to the non-linear motor refers to a parameter that can be used to control the non-linear motor, and the parameter inapplicable to the non-linear motor refers to a parameter that cannot be used to control the non-linear motor, such as a vibration waveform-related parameter in S604.

For example, if the vibration parameter sent by the first application include the vibration waveform name and the sleep duration, the universal vibrator interface may eliminate the vibration waveform name and retain the sleep duration as the available parameter.

S618: The universal vibrator interface sends the available parameter to the vibrator drive.

S619: The vibrator drive writes the available parameter into the vibrator chip.

S620: The universal vibrator interface outputs the second voltage to the motor.

In this embodiment, if the terminal device determines that the motor is a non-linear motor, the terminal device may directly extract a parameter adapting to the non-linear motor (that is, the available parameter) from the vibration parameter without determining the vibrator interface based on the type of the vibration parameter, and configure the vibrator chip based on the available parameter, so that the vibrator chip outputs a driving voltage (that is, the second voltage) to cause the non-linear motor to vibrate. It may be understood that the non-linear motor does not support rich vibration feelings due to an object characteristic thereof. Through the extraction of the parameter applicable to the non-linear motor from the vibration parameter, a problem that the non-linear motor cannot vibrate as a result of the vibration parameter not adapting to the non-linear motor can be avoided, and efficient and stable control of the motor can be achieved.

As described above, when the vibration parameter does not include the vibration duration, the terminal device may control the vibrator chip to output the first voltage to the motor within the first duration, so that the amplitude of the motor reaches the maximum value when the first duration ends, and control the vibrator chip to start to output the second voltage to the motor when the first duration ends, so that the amplitude of the motor remains at the maximum value.

Optionally, the terminal device may further control the vibrator chip to output the third voltage to the motor when a preset duration that starts from receiving of the first vibration event by the terminal device ends, so that the amplitude of the motor decreases from the maximum value to 0 within the second duration. Generally, each vibration event may be preset with a theoretical vibration duration. For example, a theoretical vibration duration corresponding to the first vibration event is the preset duration. For example, if the terminal device receives the first vibration event at 10:00, and the first vibration event requires the motor to stop vibrating after 1 minute, the terminal device may output the third voltage to the motor at 10:01 to control the motor to stop vibrating.

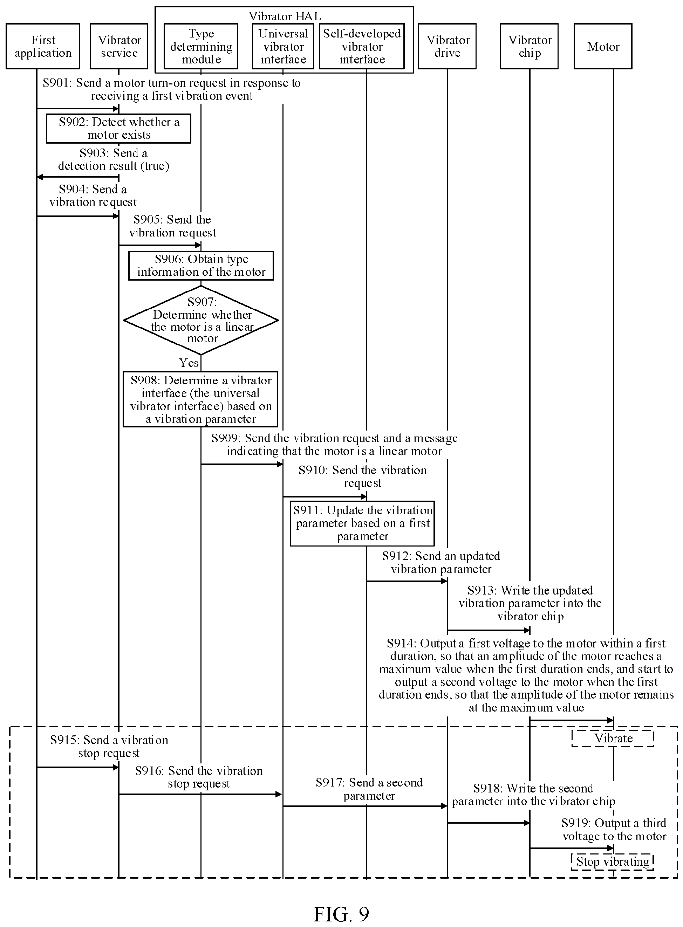

FIG. 9 is a schematic flowchart III of a motor driving method according to this application, which illustrates a process in which the terminal device controls the motor to vibrate and controls the motor to stop vibrating when the vibration duration does not include the vibration parameter. As shown in FIG. 9, the motor driving method provided in this embodiment includes S901 to S919.

S901: A first application sends a motor turn-on request to a vibrator service in response to receiving a first vibration event.

S902: The vibrator service detects whether a motor exists.

S903: The vibrator service sends a detection result to the first application.

S904: The first application sends a vibration request to the vibrator service.

S905: The vibrator service sends the vibration request to a type determining module.

S906: The type determining module obtains type information of the motor.

S907: The type determining module determines whether the motor is a linear motor.

S908: The type determining module determines a vibrator interface based on a vibration parameter.

S909: The type determining module sends the vibration request and a message indicating that the motor is a linear motor to a universal vibrator interface.

S910: The universal vibrator interface sends the vibration request to a self-developed vibrator interface.

Compared with the process shown in FIG. 6, in this embodiment, the vibration parameter does not include a vibration duration, and therefore the universal vibrator interface may not need to determine whether the vibration duration is less than a second value after receiving the vibration request. When it is determined that the motor is a linear motor, the universal vibrator interface may directly send the vibration request to the self-developed vibrator interface after receiving the vibration request. Through the self-developed vibrator interface, the motor can quickly vibrate at a maximum amplitude.

S911: The self-developed vibrator interface updates the vibration parameter based on a first parameter.

It may be learned from S612 that, the first parameter is a parameter used to control an amplitude of the linear motor to reach the maximum value from 0 within a first duration, and a second parameter is a parameter used to cause the amplitude of the linear motor to change from the maximum value to 0 within a second duration. Since the vibration parameter does not include the vibration duration, the terminal device does not know when to control the motor to stop vibrating. Therefore, the self-developed vibrator interface does not need to update the vibration parameter based on the second parameter, and updates the vibration parameter only based on the first parameter, so that the motor can quickly vibrate at the maximum amplitude.

S912: The self-developed vibrator interface sends an updated vibration parameter (which may also be referred to as a first vibration parameter) to a vibrator drive.

S913: The vibrator drive writes the updated vibration parameter into a vibrator chip.

S914: The vibrator chip outputs a first voltage to the motor within a first duration, so that an amplitude of the motor reaches a maximum value when the first duration ends, and starts to output a second voltage to the motor when the first duration ends, so that the amplitude of the motor remains at the maximum value.

Under an action of the first voltage, the amplitude of the motor quickly reaches the maximum value from 0. Under an action of the second voltage, the amplitude of the motor remains at the maximum value.

S915: The first application sends a vibration stop request to the vibrator service.

Specifically, the first application may send the vibration stop request to the vibrator service when a preset time that starts from the vibration request ends to the vibrator service. For example, if the first application sends the vibration request to the vibrator service at 9:10, and the preset time is 2 minutes, the first application sends the vibration stop request to the vibrator service at 9:12. The vibration stop request is used to trigger the motor to stop vibrating.

S916: The vibrator service sends the vibration stop request to the universal vibrator interface.

S917: The universal vibrator interface sends a second parameter to the vibrator drive.

For a description of the second parameter, refer to S612. The details are not described herein.

S918: The vibrator drive writes the second parameter into the vibrator chip.

S919: The vibrator chip outputs a third voltage to the motor.

It may be learned through simple comparison between FIG. 6 and FIG. 9 that, the motor driving method shown in FIG. 6 and the motor driving method shown in FIG. 9 are similar, except that the motor is controlled to stop vibrating through setting of the vibration duration in FIG. 6, while the motor is controlled to stop vibrating through the request to stop vibrating in FIG. 9. For the same parts of the two methods, refer to FIG. 6 and the related descriptions. The details are not described herein.

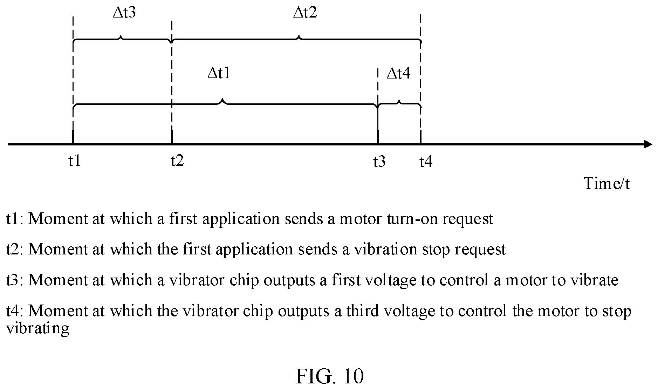

FIG. 10 is a time node diagram of a process in which the terminal device drives the motor to vibrate through the process shown in FIG. 9. t1 is a moment at which the first application sends the motor turn-on request (that is, a moment corresponding to S901). t2 is a moment at which the first application sends the vibration stop request (that is, a moment corresponding to S915). t3 is a moment at which the vibrator chip outputs the first voltage to control the motor to vibrate (that is, a moment corresponding to S914). t4 is a moment at which the vibrator chip outputs the third voltage to control the motor to stop vibrating (that is, a moment corresponding to S919). A time difference between the moment t3 and the moment t1 is ΔT1, where ΔT1 is used to represent a time used to control the motor to vibrate. A time difference between the moment t4 and the moment t2 is ΔT2, where ΔT2 is used to represent a time used to control the motor to stop vibrating. A time difference between the moment t2 and the moment t1 is ΔT3, where ΔT3 is used to represent the vibration duration requested by the first application. A time difference between the moment t4 and the moment t3 is ΔT4, where ΔT4 is used to represent an actual vibration duration of the motor.

It may be learned that, the terminal device needs to perform many operations from a moment at which the first application sends the motor turn-on request to a moment at which the vibrator chip outputs the voltage to drive the motor to vibrate (that is, from S901 to S914), but needs to perform only few operations from a moment at which the first application sends the vibration stop request to a moment at which the vibrator chip outputs the voltage to drive the motor to stop vibrating (that is, from S915 to S919), the terminal device only needs to perform fewer operations, in other words, ΔT1 is greater than ΔT2. In this case, ΔT4 is less than ΔT3. In other words, the actual vibration duration of the motor (that is, ΔT4) is less than the vibration duration requested by the first application (that is, ΔT3). An excessively short actual vibration duration of the motor may cause difficulty in sensing a vibration by a user, affecting user experience.

In an optional implementation, to avoid an excessively short actual vibration duration of the motor (that is, the actual vibration duration of the motor), the terminal device may control the vibrator chip to output the third voltage to the motor when the actual vibration duration of the motor reaches a first value, so that the amplitude of the motor decreases from the maximum value to 0 within the second duration. Optionally, the first value may be a time difference between a moment at which the terminal device generates the vibration request and a moment at which the vibration stop request is generated. Alternatively, the first value may be another parameter. Another implementation in which the terminal device controls the vibrator chip to output the third voltage to the motor when the actual vibration duration of the motor is greater than the first value is provided below.

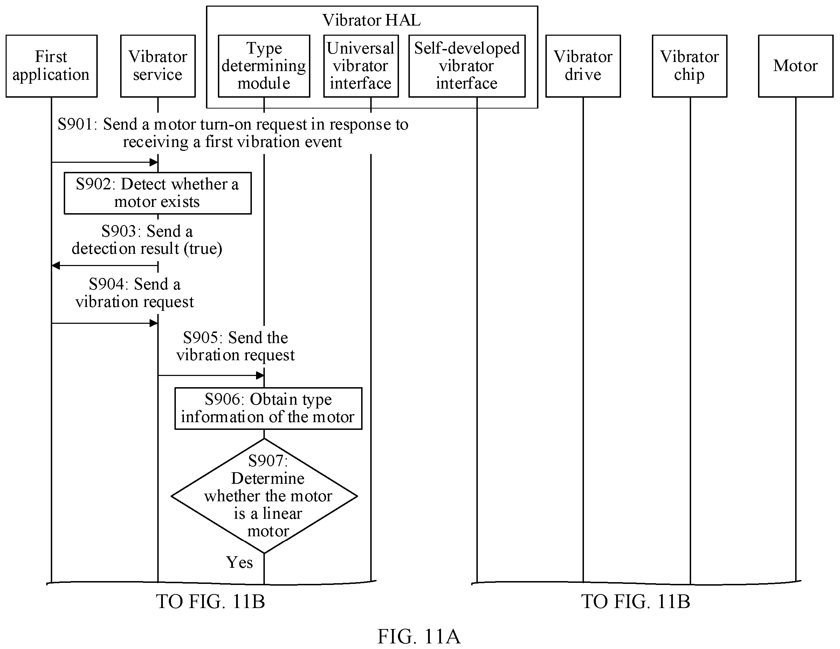

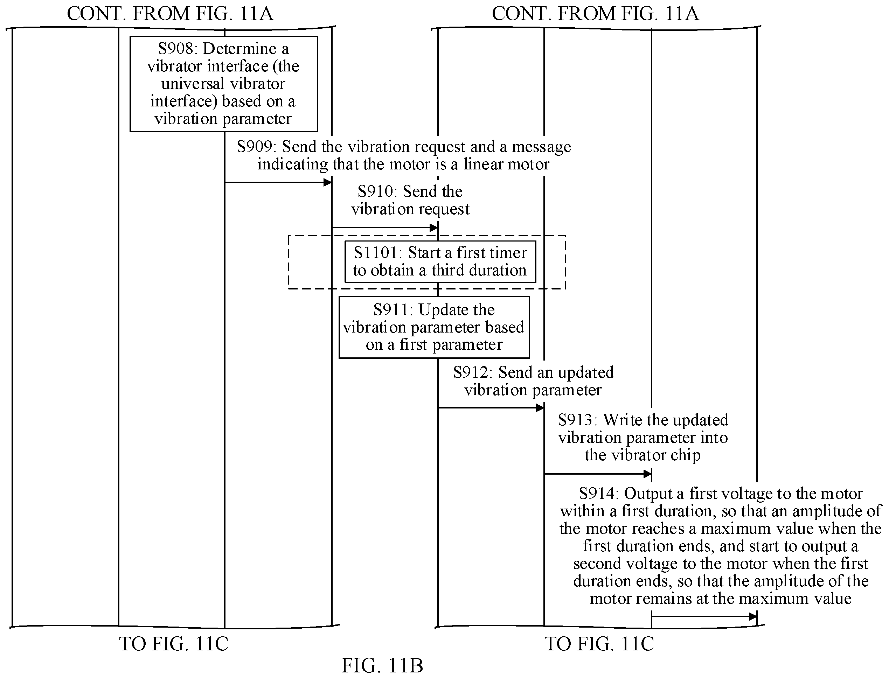

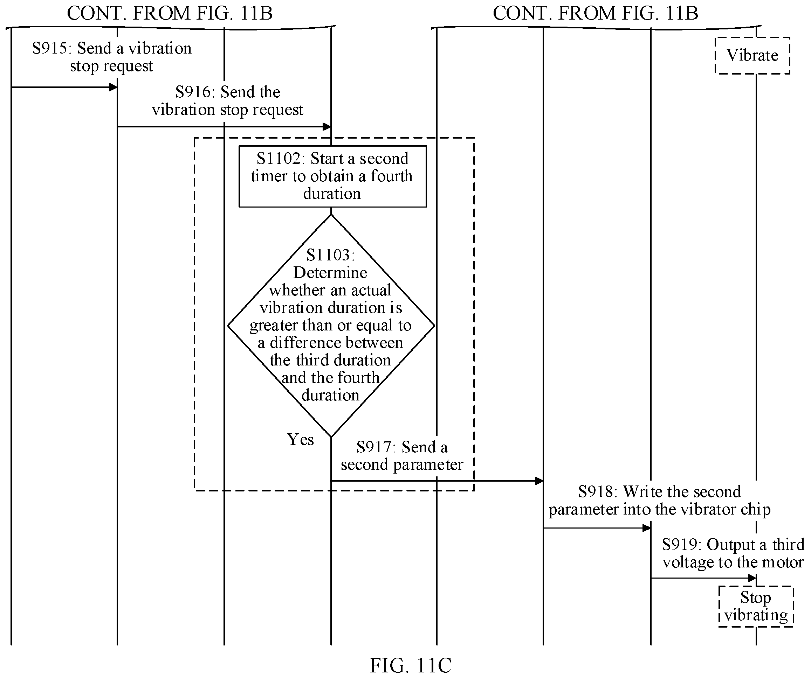

Based on the flowchart shown in FIG. 9, an embodiment provides another motor driving method. FIG. 11A to FIG. 11C are a schematic flowchart IV of a motor driving method according to this application.

It may be learned through comparison between FIG. 11A to FIG. 11C and FIG. 9 that, the motor driving method provided in FIG. 11A to FIG. 11C is similar to the motor driving method shown in FIG. 9, except that the motor driving method shown in FIG. 11A to FIG. 11C further includes S1101, S1102, and S1103. S1101, S1102, and S1103 are described below in detail. For the same content of the two implementations, refer to FIG. 9 and the related descriptions. The details are not described herein.

S1101: The self-developed vibrator interface starts a first timer to obtain a third duration.

It should be noted that, S1101 may be performed before S911, or may be performed simultaneously with S911. This is not specifically limited herein.

It may be understood that, after the self-developed vibrator interface starts the first timer, the third duration increases from 0 in real time.

After the vibrator service sends the vibration stop request to the universal vibrator interface, the universal vibrator interface may further perform S1102 and S1103.

S1102: The universal vibrator interface starts a second timer to obtain a fourth duration.

Similarly, after the universal vibrator interface starts the second timer, the fourth duration increases from 0 in real time.

S1103: The universal vibrator interface determines whether an actual vibration duration is greater than or equal to a difference between the third duration and the fourth duration.

If the universal vibrator interface determines that the actual vibration duration is greater than or equal to the difference between the third duration and the fourth duration, S917 may be performed (to be specific, the second parameter is sent to the vibrator drive). If the universal vibrator interface determines that the actual vibration duration is less than the difference between the third duration and the fourth duration, the second timer may continue counting, and S1103 is repeated until the actual vibration duration is greater than or equal to the difference between the third duration and the fourth duration. It may be understood that, in this embodiment, the first value is the difference between the third duration and the fourth duration.

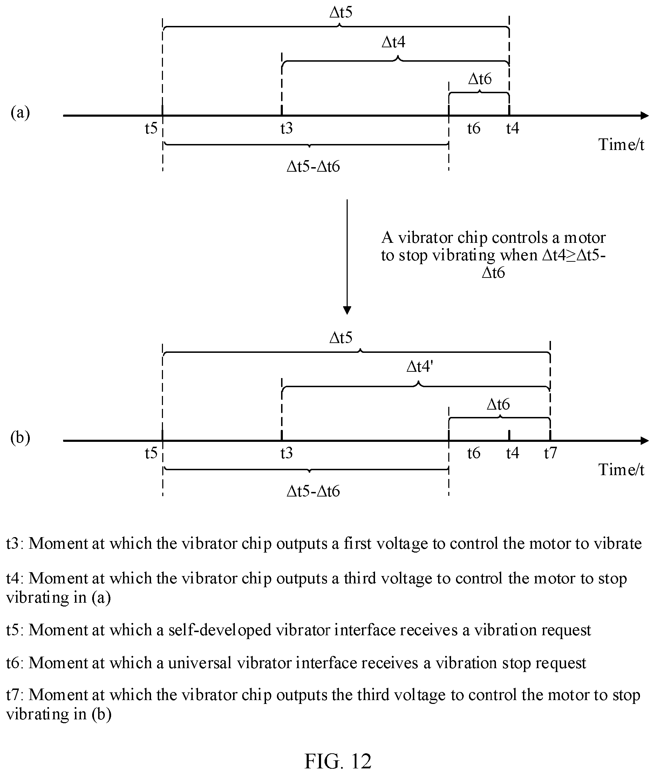

(a) and (b) in FIG. 12 are respectively time node diagrams of processes in which the terminal device drives the motor to vibrate through the processes shown in FIG. 9 and FIG. 10. t3 is the moment at which the vibrator chip outputs the first voltage to control the motor to vibrate (that is, the moment corresponding to S914). t4 is the moment at which the vibrator chip outputs the third voltage to control the motor to stop vibrating in FIG. 9 (that is, the moment corresponding to S919 in FIG. 9). t5 is a moment at which the self-developed vibrator interface receives the vibration request. t6 is a moment at which the universal vibrator interface receives the vibration stop request. t7 is a moment at which the vibrator chip outputs the third voltage to control the motor to stop vibrating in FIG. 11A to FIG. 11C (that is, a moment corresponding to S919 in FIG. 11A to FIG. 11C). Δt5 is the third duration obtained by the first timer, and Δt6 is the fourth duration obtained by the second timer. A time difference between the moment t4 and the moment t3 is Δt4, where Δt4 is used to represent an actual vibration duration of the motor when the motor is controlled to vibrate by using the flowchart shown in FIG. 9. A time difference between the moment t7 and the moment t3 is Δt4', where Δt4' is used to represent an actual vibration duration of the motor when the motor is controlled to vibrate by using the flowchart shown in FIG. 11A to FIG. 11C.

It may be learned through comparison between (a) and (b) in FIG. 12 that, it is determined whether the actual vibration duration is greater than or equal to the difference between the third duration and the fourth duration, and S917 is performed when the actual vibration duration is greater than or equal to the difference between the third duration and the fourth duration to control the motor to stop vibrating, so that the actual vibration duration of the motor changes from Δt4 to Δt4'. In this way, the actual vibration duration of the motor is increased, thereby bringing a clear vibration feeling to the user, and improving the user experience.

Some embodiments of this application provide a terminal device. The terminal device may include a memory and one or more processors. The memory is coupled to the processor. The memory is configured to store computer program code. The computer program code includes computer instructions. When the processor executes the computer instructions, the terminal device may perform the functions or steps performed by the terminal device in the foregoing method embodiments. For a structure of the terminal device, refer to the structure of the terminal device shown in FIG. 3.

An embodiment of this application further provides a motor. The motor may be configured to implement the vibration waveforms and the like under various configuration parameters in the foregoing embodiments. A terminal device equipped with the motor may perform the functions or steps performed by the terminal device in the foregoing method embodiments.

An embodiment of this application further provides a computer-readable storage medium. The computer-readable storage medium includes computer instructions. The computer instructions, when run on the foregoing terminal device, cause the terminal device to perform the functions or steps performed by the terminal device in the foregoing method embodiments.

An embodiment of this application further provides a computer program product. The computer program product, when run on a terminal device, causes the terminal device to perform the functions or steps performed by the terminal device in the foregoing method embodiments.

Through the descriptions of the foregoing implementations, a person skilled in the art may clearly understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above.

In embodiments provided in this application, it should be understood that the disclosed apparatus and method may be implemented in other manners. For example, the apparatus embodiment described above is merely an example. For example, the module or unit division is merely logical function division and may be another division manner during actual implementation. For example, a plurality of units or components may be combined or integrated into another apparatus, or some features may be ignored or not executed. In addition, the displayed or discussed mutual coupling or direct coupling or communication connection may be implemented through some interfaces. The indirect coupling or communication connection between the apparatuses or units may be implemented in an electronic, mechanical, or another form.

The units described as separate parts may or may not be physically separate, and parts displayed as units may be one or more physical units, may be located at one place, or may be distributed at different places. Some or all of the units may be selected according to actual needs to achieve the objectives of the solutions of embodiments.

In addition, the functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes instructions for enabling a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read only memory (read only memory, ROM), a random access memory (random access memory, RAM), a magnetic disk, or a compact disc.

The foregoing content is merely specific implementations of this application, and the protection scope of this application is not limited thereto. Any variation or replacement made within the technical scope disclosed in this application shall fall within the protection scope of this application. Therefore, the protection scope of this application shall be subject to the protection scope of the claims.

## Claims

1. A motor driving method, applied to a terminal device, wherein the terminal device comprises a vibrator chip and a motor, the motor is a linear motor, and the method comprises:
receiving a first vibration event used to trigger the motor to vibrate; and
in response to the first vibration event: controlling the vibrator chip to output a first voltage to the motor within a first duration, so that an amplitude of the motor reaches a maximum value when the first duration ends; and
controlling the vibrator chip to start to output a second voltage to the motor when the first duration ends, so that the amplitude of the motor remains at the maximum value, wherein
the first voltage and the second voltage are in a same direction, and an absolute value of the first voltage is greater than an absolute value of the second voltage.

2. The method according to claim 1, wherein the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further comprises:
obtaining a vibration parameter of the motor in response to the first vibration event; and
when the vibration parameter does not comprise a vibration duration, controlling the vibrator chip to output the first voltage to the motor within the first duration, so that the amplitude of the motor reaches the maximum value when the first duration ends, and controlling the vibrator chip to start to output the second voltage to the motor when the first duration ends, so that the amplitude of the motor remains at the maximum value.

3. The method according to claim 2, further comprising:
controlling the vibrator chip to output a third voltage to the motor when a preset duration that starts from receiving of the first vibration event by the terminal device ends, so that the amplitude of the motor decreases from the maximum value to 0 within a second duration, wherein
the third voltage and the second voltage are in opposite directions, and an absolute value of the third voltage is greater than the absolute value of the second voltage; and
the preset duration is greater than the first duration.

4. The method according to claim 2, further comprising:
controlling the vibrator chip to output a third voltage to the motor when an actual vibration duration of the motor reaches a first value, so that the amplitude of the motor decreases from the maximum value to 0 within a second duration, wherein
the third voltage and the second voltage are in opposite directions, and an absolute value of the third voltage is greater than the absolute value of the second voltage.

5. The method according to claim 1, wherein the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further comprises:
obtaining a vibration parameter of the motor in response to the first vibration event; and
when the vibration parameter comprises the vibration duration: controlling the vibrator chip to output the first voltage to the motor within the first duration, so that the amplitude of the motor reaches the maximum value when the first duration ends;
controlling the vibrator chip to start to output the second voltage to the motor within the vibration duration when the first duration ends, so that the amplitude of the motor remains at the maximum value, and
controlling the vibrator chip to start to output a third voltage to the motor when the vibration duration ends, so that the amplitude of the motor decreases from the maximum value to 0 in a second duration, wherein
the third voltage and the second voltage are in opposite directions, and an absolute value of the third voltage is greater than the absolute value of the second voltage.

6. The method according to claim 5, wherein the controlling the vibrator chip to output the first voltage to the motor within the first duration, so that the amplitude of the motor reaches the maximum value when the first duration ends, controlling the vibrator chip to start to output the second voltage to the motor within the vibration duration when the first duration ends, so that the amplitude of the motor remains at the maximum value, and controlling the vibrator chip to start to output a third voltage to the motor when the vibration duration ends, so that the amplitude of the motor decreases from the maximum value to 0 within a second duration further comprises:
if the vibration duration is less than a second value, controlling the vibrator chip to output the first voltage to the motor within the first duration, so that the amplitude of the motor reaches the maximum value when the first duration ends, controlling the vibrator chip to start to output the second voltage to the motor within the vibration duration when the first duration ends, so that the amplitude of the motor remains at the maximum value, and controlling the vibrator chip to start to output the third voltage to the motor when the vibration duration ends, so that the amplitude of the motor decreases from the maximum value to 0 within the second duration.

7. The method according to any one of claims 1 to 6, wherein the first vibration event comprises one of the following: a terminal device unlocking operation is received from a user, an online payment operation is received from the user, a face registration operation is received from the user, a skill releasing operation is received from the user, an incoming call request is received, and current time matches preset time.

8. The method according to any one of claims 1 to 6, wherein the terminal device comprises a first application, a vibrator service, a vibrator hardware abstraction layer HAL, and a vibrator drive; and the vibrator HAL comprises a type determining module, a first interface, and a second interface, and the in response to the first vibration event, controlling the vibrator chip to output a first voltage to the motor within a first duration, so that an amplitude of the motor reaches a maximum value when the first duration ends, and controlling the vibrator chip to start to output a second voltage to the motor when the first duration ends, so that the amplitude of the motor remains at the maximum value further comprises:
sending, by the first application, a vibration request to the vibrator service in response to the first vibration event;
sending, by the vibrator service, the vibration request to the type determining module, wherein the vibration request comprises the vibration parameter;
determining, by the type determining module, whether the motor is a linear motor;
sending, by the type determining module, the vibration request and a message indicating that the motor is a linear motor to the first interface when a type of the vibration parameter indicates that the vibrator interface is the first interface;
sending, by the first interface, the vibration request to the second interface;
updating, by the second interface, the vibration parameter based on the first parameter, wherein the first parameter is used to describe a vibration waveform generated by the motor through a vibration for the first duration under an action of the first voltage;
sending, by the second interface, a first vibration parameter to the vibrator drive, wherein the first vibration parameter is a vibration parameter updated based on the first parameter;
writing, by the vibrator drive, the first vibration parameter into the vibrator chip; and
outputting, by the vibrator chip, the first voltage to the motor within the first duration, so that the amplitude of the motor reaches the maximum value when the first duration ends, and starting to output the second voltage to the motor when the first duration ends, so that the amplitude of the motor remains at the maximum value.

9. The method according to claim 8, wherein the updating, by the second interface, the vibration parameter based on the first parameter further comprises:
updating, by the second interface, the vibration parameter based on the first parameter when the vibration parameter does not comprise the vibration duration.

10. The method according to claim 9, further comprising:
sending, by the first application, a vibration stop request to the vibrator service when the preset duration that starts from the receiving of the first vibration event ends;
sending, by the vibrator service, the vibration stop request to the first interface;
sending, by the first interface, a second parameter to the vibrator drive, wherein the second parameter is used to describe a vibration waveform generated by the motor through a vibration for the second duration under an action of the third voltage;
writing, by the vibrator drive, the second parameter into the vibrator chip; and
outputting, by the vibrator chip, the third voltage to the motor, so that the amplitude of the motor decreases from the maximum value to 0 within the second duration.

11. The method according to claim 10, further comprising:
starting, by the second interface, a first timer to obtain a third duration in response to receiving the vibration request; and
starting, by the first interface, a second timer to obtain a fourth duration in response to receiving the vibration stop request, wherein
the sending, by the first interface, a second parameter to the vibrator drive further comprises:
sending, by the first interface, the second parameter to the vibrator drive when the actual vibration duration of the motor reaches the first value, wherein the first value is a difference between the third duration and the fourth duration.

12. The method according to claim 9, further comprising:
updating, by the second interface, the vibration parameter based on the first parameter and the second parameter when the vibration parameter comprises the vibration duration, wherein the second parameter is used to describe a vibration waveform generated by the motor through a vibration for the second duration under an action of the third voltage;
sending, by the second interface, a second vibration parameter to the vibrator drive, wherein the second vibration parameter is a vibration parameter updated based on the first parameter and the second parameter;
writing, by the vibrator drive, the second vibration parameter into the vibrator chip; and
outputting, by the vibrator chip, the first voltage to the motor within the first duration, so that the amplitude of the motor reaches the maximum value when the first duration ends, starting to output the second voltage to the motor within the vibration duration when the first duration ends, so that the amplitude of the motor remains at the maximum value, and starting to output the third voltage to the motor when the vibration duration ends, so that the amplitude of the motor decreases from the maximum value to 0 within the second duration, wherein
the third voltage and the second voltage are in opposite directions, and the absolute value of the third voltage is greater than the absolute value of the second voltage.

13. The method according to claim 12, wherein the updating, by the second interface, the vibration parameter based on the first parameter and the second parameter when the vibration parameter comprises the vibration duration further comprises:
updating, by the second interface, the vibration parameter based on the first parameter and the second parameter when the vibration parameter comprises the vibration duration and the vibration duration is less than the second value.

14. The method according to claim 13, further comprising:
determining, by the first interface, whether the vibration duration is less than the second value, wherein
the sending, by the first interface, the vibration request to the second interface further comprises:
sending, by the first interface, the vibration request to the second interface if the vibration duration is less than the second value.

15. The method according to any one of claims 8 to 14, wherein the sending, by the first application, a vibration request to the vibrator service in response to the first vibration event further comprises:
sending, by the first application, a motor turn-on request to the vibrator service in response to the first vibration event;
detecting, by the vibrator service, whether the motor exists, and sending a detection result to the first application; and
sending, by the first application, the vibration request to the vibrator service if the detection result indicates that the motor exists.

16. A terminal device, comprising a memory and one or more processors, wherein the memory is coupled to the processor; and
the memory is configured to store computer program code, the computer program code comprises computer instructions, and the computer instructions, when executed by the processor, cause the terminal device to perform the method according to any one of claims 1 to 15.

17. A computer-readable storage medium, comprising computer instructions, wherein
the computer instructions, when run on a terminal device, cause the terminal device to perform the method according to any one of claims 1 to 15.
